# EUROPEAN PATENT APPLICATION

(11) **EP 3 333 938 A1**
(43) Date of publication of application: **13.06.2018**
(21) Application number: 16202846.8
(22) Date of filing: 08.12.2016
(51) Int. Cl.: H01M 2/16, H01M 10/052, H01M 10/058, H01M 10/48

(54) **BATTERY CELL AND METHOD FOR DETECTING AN INTERNAL SHORT CIRCUIT OF A BATTERY CELL**

(71) Applicant: Lithium Energy and Power GmbH & Co. KG, 70469 Stuttgart (DE)
(72) Inventor: Hiller, Martin Manuel, 70469 Stuttgart (DE); Fuchs, Franz, 70191 Stuttgart (DE)
(74) Representative: Bee, Joachim

(57) **Abstract**

The invention relates to a battery cell, in particular a lithium ion cell
comprising a separator (8) having at least three layers (22, 24, 26), wherein a first layer (22) electrically isolates against a first electrode (4) of the battery cell, wherein a second layer (24) arranged on the first layer (22) comprises one or more conducting paths (32) having at least two external contacts (28) and wherein a third layer (26) arranged on the second layer (24) electrically isolates against a second electrode (6) of the battery cell. It is specified that the one or more conducting paths (32) are densely arranged in the second layer (24).

Furthermore, the invention relates to a method for determining a short circuit in such a battery cell, wherein a current is led through the one or more conducting paths (32) arranged in the second layer (24), and wherein a short circuit is detected if a measured variable indicating the condition of the one or more conducting paths (32) changes.

## Description

The invention relates to a battery cell and to a method for detecting a short circuit in a battery cell.

### Prior Art

In the present disclosure the terms "battery" and "battery cell" are used. These expressions are understood to encompass primary cells as well as secondary cells, i.e. accumulator cells. A battery typically comprises a set of battery cells electronically linked to each other.

In recent years, the battery market is gaining pace. Several cell chemistries, e.g. nickel metal hydrate cells, lithium ion secondary cells, lithium primary cells have been proposed. Typically jelly rolls or electrode stacks are connected to current collector tabs and the complete assembly is sealed hermetically in aluminum or steel cans. Before assembly of the single cells in a battery pack, the individual cells are coated with plastic tapes or coated with electronically non-conductive paint. This is done in order to avoid any electrical contact between the cells in a battery pack and hence a short circuit within this system.

Jelly rolls or stacked battery cells of the lithium ion type typically consist of a cathode electrode material coated on an aluminium foil (positive electrode), an anode electrode material on a copper foil (negative electrode) and a separator soaked in electrolyte. The prismatic jelly roll is made by rolling these elements together. A stacked battery cell is created by stacking these elements in layers on one another.

During the charge of lithium ion cells, the lithium ions are migrating from cathode by dint of electrolyte across the separator to the anode simultaneously with an electron flow in the same direction on the external circuit. During discharge these processes are taking place in the opposite direction.

If metal contaminations, e.g. a copper particle, are introduced into the cell during the production process, they can form a metallic dendrite which grows from the anode to the cathode or to the cathode aluminium foil. Dendrites, which reach from the cathode to the anode, can create an electrical short circuit in the battery cell. Another reason for a short circuit of the battery cell can be a direct perforation of the separator with the metallic particle itself. Another reason for a short circuit of the batter cell can be a mechanical deformation of the cell, e.g. due to crush or crash, leading to separator fissures.

For the detection of those internal short circuits, different strategies have been proposed so far. In US 2014/0329120 A1 a battery cell is described, wherein the separator comprises a functional layer with a sensor connected to the functional layer. The separator is metal coated and contacted from the outside. As soon as a metal dendrite growing from the anode to the cathode contacts this functional layer of this separator, its potential drops and the potential short circuit may be detected before the dendrite has completely grown from anode to cathode.

However, the method disclosed in US 2014/329120 A1 is not selective to the magnitude of the internal short circuit. A very weak dendrite (f.e. a lithium dendrite) might also cause a potential drop of the separator, even if the weak dendrite will not cause any critical short circuit. In this case, the cell may be judged defective and sorted out for safety reasons, even if it still could be used without risk. The sorting out of "healthy cells" can cause huge additionally costs in manufacture.

US 2013/0004811 A1 describes a separator for a battery cell comprising a first porous layer with a first polymer layer and a second layer located on the first porous layer wherein the second layer comprises an electrical circuit. A current flow through the second layer is checked to detect an internal short circuit.

US 2015/0171398 discusses a separator for a battery cell comprising two porous layers and an electrically conductive layer sandwiched there between. The resistance of the electrically conductive layer is checked to detect an internal short circuit.

It is an objective of the present invention to detect a critical internal short circuit between anode and cathode shortly after it has been established and well before a safety critical event like thermal runaway occurs. At the same time a false alert due to the detection of non-critical internal short circuits shall be avoided.

### Summary of the Invention

In a first aspect, the present invention proposes a battery cell, in particular lithium ion cell, comprising a separator having at least three layers wherein a first layer electrically isolates against a first electrode of the battery cell, wherein a second layer arranged on the first layer comprises one or more conducting paths having at least two external contacts and wherein a third layer arranged on the second layer electrically isolates against a second electrode of the battery cell. The one or more conducting paths are densely arranged.

The functionality of the separator of the invention is based on the fact that an internal short circuit between anode and cathode in the battery cell due to a metallic particle contamination, mechanical deformation or dendrite will result in a perforation of the separator and a local heat generation due to the short circuit current. If this internal short circuit has the potential to become critical, the heat generation is sufficiently large and the separator will locally melt. In this case the internal short circuit has the potential to become critical.

Due to the internal short's heat generation and the local melting of the separator, the electric connection of the separator's electric circuit will be interrupted. The current flow through the conducting paths or their resistance is verified continuously. The interruption of the conducting paths marks the detection of a critical internal short. The cell can be sorted out or corresponding safety measures can be undertaken.

The separator according to the invention has a second layer with conducting paths, i.e. with an electric circuit. The conducting paths are densely arranged.

The second layer may only contain the conducting paths, i.e. may be defined by the conducting paths. Alternatively, the second layer may comprise the conducting paths and one ore more porous polymer layers. The conducting paths may be fully or partly embedded in the porous polymer layer or layers.

The expression "densely arranged" is understood in the sense that e.g. between 0,001 % and 10 %, preferably less than 5 % of the area of the separator is covered by the material of the conducting paths. The coverage is chosen to be so low that no or only a minor impact on the cell performance is seen. On the other hand the electric circuits are deposited/printed densely enough so that the internal short circuit and its hotspot is still closely to the circuit and able to melt and interrupt the circuit.

According to an embodiment, the conducting paths are arranged meander-like, i.e. in the form of a meander. The conducting paths may form a meander-like pattern, i.e. a sinuous line. The meander-like pattern may have between 2 and 1000 turns, in particular from 20 to 100. The meander is preferably defined to have at minimum 1 line per 100 x 100 µm and at maximum 1 line per 1 x 1 cm, most preferred 1 line per 3 x 3 mm. The most preferred dimension reduced to one dimension: 500 mm / 3 mm → 167 lines = 167 turns.

The conducting paths in the second layer may form one single meander-like pattern. Alternatively, the conducting paths of the second layer may form several meander-like patterns which may be positioned next to each other, or also above one another.

Alternatively, the conducting paths may be arranged loop-like, i.e. may have the form of loops. The loops may be defined in that they have only one turn.

According to an embodiment, a plurality of conducting paths are provided, each of which having own external contacts. These several conducting paths may be provided meander-like, loop-like and/or may form single lines.

The external contacts of the conducting paths may be provided at the same side, on opposed sides of the separator, or on adjoining sides of the separator, i.e. cross corner.

If several conducting paths are used instead of one single conducting path, then the resistance for each circuit will be reduced in comparison to the one single long conducting path. In case that a very long conducting path is used, its resistance between the external contacts is rather high. Consequently the sensitivity of the measurement devices is to be chosen high or, alternatively, a higher measurement voltage must be used. In case that several conducting paths are used, each having external contacts, then the resistance for each circuit is reduced and the measurement voltage can be reduced.

Another advantage is that the resistance change over the time can be monitored and compared between the different loops or circuits, such that defects or aging of the electric connection can be verified.

For stacked cells, separate conducting paths may be provided for each layer in the stack.

According to an embodiment, conducting paths are provided in at least two layers above one another.

The conducting paths may be arranged in a crossed pattern such that it is possible to localize the position of the dendrite. Furthermore, if several layers of conducting paths are provided, then redundant measurements may be performed such that it may be detected if a conducting path is interrupted due to aging effects. The conducting paths are located spaced apart from each other such that they do not short circuit each other.

According to a preferred embodiment, the conducting paths form a closely meshed virtual grid. The closed meshed virtual grid preferably covers the whole area of the separator. The term "virtual" is to be understood as two meanders or sets of loops being aligned above one another without direct connection. The grid may be preferably defined to have at minimum 1 line per 100 x 100 µm and at maximum 1 line per 1 x 1 cm, most preferred 1 line per 3 x 3 mm. The distance between the lines may be the same or different for both dimensions.

At least one of the isolating layers comprises a porous polymer. The porous polymer may be present in the first layer and in the third layer. The porous polymer may be conventionally produced by extruding and stretching polymer foils, using solvents for the creation of porous polymers or non-wovens. Typically, these polymers may include polyethylene, polypropylene or polyethylenetherephthalate.

The first and the third layer may comprise different types of porous polymers.

According to an embodiment, at least one of the isolating layers comprises a binder and an electronically insulating metal oxide. Preferred binders are PVdF (polyvinylidene difluoride), SBR (styrene butadiene rubber), NaCMC (sodium cellulose gum) or mixtures thereof. Preferred electronically isolating metal oxides are Al₂O₃, ZrO₂, TiO₂ or SiO₂, or mixtures thereof.

According to an embodiment, the isolating layer comprising the binder and the electronically isolating metal oxide isolates against the cathode of the battery cell.

The conducting paths may be formed by screen printing. The conducting paths may be comprised of titanium or aluminum metal. However, also other candidates for the conducting circuits are possible, e.g. copper. The conducting paths may be passivated or coated, for better long term stability. A possible choice is an aluminum oxide layer surrounding the aluminum wire.

The conducting paths preferably range from 50 nm to 1 µm in cross-section. The passivation may be comprised of a 5 to 20 nm thick jacket.

In another aspect, the present invention provides a separator for being used in any of the battery cells as described above.

The battery according to the invention cell is not restricted to a specific cell format. The battery cell may be a jelly roll or a stack. The battery cell may be a prismatic cell, a button cell, a cylindrical cell or even a pouch cell.

In another aspect, the invention provides a method for the detection of short circuit, in particular a critical short circuit, in battery cell wherein the battery cell comprises at least one separator, having at least three layers wherein a first layer electrically isolates against a first electrode of the battery cell, wherein a second layer arranged on the first layer comprises one or more conducting paths having at least two external contacts, wherein the one or more conducting paths are densely arranged, wherein a third layer arranged on the second layer electrically isolates against a second electrode of the battery cell, wherein an electrically current is led through the one or more conducting paths arranged in the second layer, and wherein a short circuit is detected if a measured variable indicating the condition of the one or more conducting paths changes.

The measured variable may be the electrical resistance of the conducting path. Alternatively, the measured variable may be the current or the voltage, or any derived or integrated variables therefrom.

The method may be performed with any one of the battery cells as described above.

### Advantages of the Invention

The invention allows detecting dendritic short circuits, short circuits which are due to the metal particles perforating the separator, as well as crush or crash situations which damage the separator.

The separator allows the detection of internal short circuits which have the potential to become critical. Weak internal circuits or unstable internal short circuits which do not significantly reduce the safety of the cell will not create a false alert which will result in this cell being sorted out.

The separator comprises a layer in which a comparatively small area is covered with metal such that the separator will detect only significant local hotspots.

The small surface covered by the metal of the conducting paths will reduce the influence of the technology on the performance of the battery cell.

### Short Description of the Drawings

Exemplary embodiments of the invention are depicted in the following figures and will be explained in the following description of the figures.
- Figure 1: shows a sectional view from the side indicating a section of a battery cell comprising a first electrode, a second electrode and a separator according to an embodiment of the invention,
- Figure 2: shows a top view on a layer of a separator according to a first embodiment of the invention,
- Figure 3: shows a top view on a layer of a separator according to a second embodiment of the invention,
- Figure 4: shows a top view on a layer of a separator according to a third embodiment of the invention,
- Figure 5: shows a sectional view from the side of the embodiment shown in figure 4 along line A-A, and
- Figure 6: shows a sectional view from the side of the embodiment shown in figure 2 along line B-B.

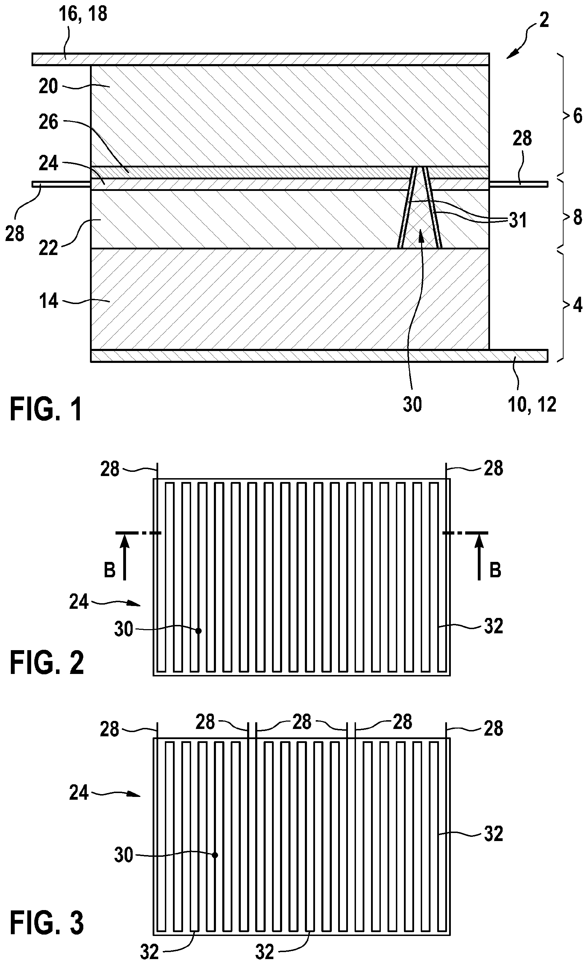

In the following description of the figures, same or similar features are provided with same or similar reference signs. In some cases, redundant description of these components is avoided, in order to improve the clarity of the description. Figure 1 shows an arrangement 2 comprising a first electrode 4, a second electrode 6 and a separator 8 sandwiched between them.

In the represented embodiment, the first electrode 4 forms the anode of the battery, e.g. a lithium ion battery. The second electrode 6 forms the cathode, respectively.

The first electrode 4 comprises a first metal foil 10 with a first current collector 12 arranged on a first layer of a first active material 14. The second electrode 6 comprises a second metal foil 16 with a second current collector 18 arranged on a second layer of a second active material 20.

The separator 8 is formed in accordance with the invention and comprises a first layer 22 providing an electrical insulation against the first electrode 4. The first layer 22 may be comprised of a porous polymer. The first layer 22 may be identified as the common prior art separator. The separator 8 comprises a second layer 24 arranged on the first layer 22 which comprises an electrical circuit with a set of conducting paths (not depicted in figure 1) and at least two external contacts 28. The separator 8 comprises a third layer 26 arranged on the second layer 24 providing an electrical insulation against the second electrode 6. The third layer 26 may be a binder coating with an electrically isolating metal oxide.

In figure 1 is also schematically depicted a dendrite 30 forming an electrical short circuit between the first electrode 4 and the second electrode 6. The dendrite 30 has grown from the first electrode 4 to the second electrode 6. It locally melts the polymer and the conducting paths in the respective layers 22, 24, 26 as indicated by the gaps 31.

Figure 2 shows a top view on a second layer 24 according to a first embodiment of the invention.

In the depicted embodiment, the second layer 24 is comprised of one conducting path 32 extending essentially across the whole area of the separator 8. The conducting path 32 is formed meander-like. The conducting path 32 has two external contacts 28 which protrude from the same side of the rectangular plan of the second layer 24. In figure 1 there is depicted an embodiment in which the contacts 28 protrude from opposite sides of the second layer 24.

Schematically, the dendrite 30 is also shown in figure 2. The impact of the dendrite 30 is such that the conducting path 32 is interrupted at a certain spot. The resistance measurement of the conducting path 32 performed at the external contacts 28 may detect the interruption of the conducting path 32 by detecting a significant change. Similar conclusions may be drawn from supervising the current or the voltage at the external contacts 28.

Figure 3 shows another embodiment wherein the second layer 24 comprises three different conducting paths 32, each having external contacts 28 protruding from the same side of the rectangular plan of the second layer 24.

In comparison with the embodiment as depicted with respect to figure 2, this embodiment has the advantage that the resistance of each of the conducting paths 32 is smaller because of its smaller length, so as to reduce the uncertainty of measurement. A draw-back of this embodiment is, however, that several measurements have to be performed and evaluated. Furthermore, six external contacts 28 have to be electronically contacted there.

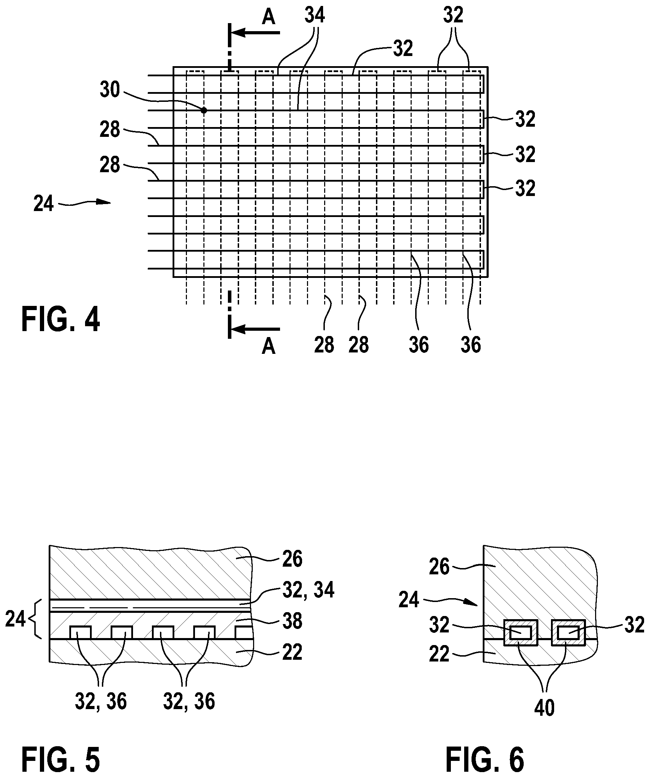

Figure 4 shows another embodiment of the second layer 24 with conducting paths 32 arranged therein. The conducting paths 32 arranged in the second layer 24 form single loops.

In figure 4, furthermore, the conducting paths 32 are arranged in two layers 34, 36, namely in an upper layer 34 and a lower layer 36 translucently represented. The conducting paths 32 of the upper layer 34 are arranged perpendicularly to the conducting paths 32 of the lower layer 36. Due to this arrangement of the conducting paths 32 it is possible to determine the position of the dendrite 30 precisely. The two layers 34, 36 form a closely meshed grid, which is, however, only a virtual one. Every two electrical circuits define a single mesh of a grid in the form of a matrix.

Figure 5 shows the embodiment depicted in figure 4 in sectional view from the side. The conducting paths 32 of the upper layer 34 are arranged in parallel. The conducting paths 32 of the lower layer 36 are also arranged in parallel. The conducting paths 32 of the upper layer 34 are arranged perpendicularly to the conducting paths 32 of the lower layer 36.

The conducting paths 32 of the lower layer 36 are coated by a porous polymer layer 38, thereby providing a vertical distance thus avoiding short circuit between the conducting paths 32 arranged in the two layers 34, 36.

Figure 6 shows the embodiment depicted in figure 2 in sectional view from the side. The conducting paths 32 have been printed on the first layer 22 and have been provided with passivation 40. The passivation 40 prevents the metal from its dissolution in the electrolyte. Alternatively or additionally to passivation 40, the conducting paths 32 may be covered by a polymer layer 38 as depicted in figure 5.

The exemplary embodiments are not to be understood as limiting the invention. The person of skill in the art will readily be aware of a multitude of modifications which are in the spirit and scope of the present set of claims.

## Claims

1. Battery cell, in particular lithium ion cell, comprising a separator (8) having at least three layers (22, 24, 26), wherein a first layer (22) electrically isolates against a first electrode (4) of the battery cell, wherein a second layer (24) arranged on the first layer (22) comprises one or more conducting paths (32) having at least two external contacts (28) and wherein a third layer (26) arranged on the second layer (24) is electrically isolating against a second electrode (6) of the battery cell, **characterized in that** the one or more conducting paths (32) are densely arranged.

2. Battery cell according to claim 1, **characterized in that** between 0,001 % and 10 %, preferably less than 5 % of the area of the separator (8) is covered by the material of the conducting paths (32).

3. Battery cell according to any one of the preceding claims, characterized one or more conducting paths (32) are arranged meander-like or loop-like.

4. Battery cell according to any one of the preceding claims, **characterized in that in that** a plurality of conducting paths (32) is provided, each of which having own external contacts (28).

5. Battery cell according to any one of the preceding claims, **characterized in that** the conducting paths (32) form a closely meshed virtual grid.

6. Battery cell according to any one of the preceding claims, **characterized in that** the first layer (22) and/or the second layer (24) comprise a porous polymer.

7. Battery cell according to any one of the preceding claims, **characterized in that** the first layer (22) and/or the second layer (24) comprise a binder and an electrically isolating metal oxide.

8. Battery cell according to any one of the preceding claims, **characterized in that** the layer (22, 24) having the binder and the electrically isolating metal oxide isolates against the cathode of the battery cell.

9. Separator (8) for use in a battery cell according to any one of the preceding claims.

10. Method for the detection of a short circuit in a battery cell comprising at least one separator (8) having at least three layers (22, 24, 26), wherein a first layer (22) electrically isolates against a first electrode (4) of the battery cell, wherein a second layer (24) arranged on the first layer (22) comprises one or more conducting paths (32) having at least two external contacts (28), wherein the one or more conducting paths (32) are densely arranged, and wherein a third layer (26) arranged on the second layer (24) is electrically isolating against a second electrode (6) of the battery cell, **characterized in that** a current is led through the one or more conducting paths (32) arranged in the second layer (24), and wherein a short circuit is detected if a measured variable indicating the condition of the one or more conducting paths (32) changes.
